Europäisches Patentamt

European Patent Office

Office européen des brevets

(11) Veröffentlichungsnummer: **0 619 640 A2**

## (12) EUROPÄISCHE PATENTANMELDUNG

(21) Anmeldenummer: **94105387.8**

(22) Anmeldetag: **07.04.94**

(51) Int. Cl.5: **H02K 41/03**, H02P 7/00

(30) Priorität: **08.04.93 DE 4311664**

(43) Veröffentlichungstag der Anmeldung:
**12.10.94 Patentblatt 94/41**

(84) Benannte Vertragsstaaten:
**AT BE CH DE DK ES FR GB IE IT LI NL PT SE**

(71) Anmelder: **Nase, Rainer, Dipl.-Phys.**
**Schlossbergstrasse 6a**
**D-66280 Sulzbach (DE)**
Anmelder: **Boussonville, Albert, Dipl.-Ing.**
**Hunsrückstrasse 1**
**D-66333 Völklingen (DE)**

(72) Erfinder: **Nase, Rainer, Dipl.-Phys.**
**Schlossbergstrasse 6a**
**D-66280 Sulzbach (DE)**

(74) Vertreter: **Vièl, Georg, Dipl.-Ing.**
**Patentanwälte VIEL & VIEL**
**Weinbergweg 15**
**D-66119 Saarbrücken (DE)**

(54) **Reluktanzmotor.**

(57) Die Erfindung betrifft einen Reluktanzmotor. Die wesentlichen Merkmale des erfindungsgemäßen Reluktanzmotors bestehen darin, daß die geometrische Anordnung und Ausbildung von Stator- und Aktuatorpolen und der zeitliche Verlauf von Induktivität und Erregerstrom aufeinander abgestimmt und optimiert wurden. Die magnetisch erregbaren Aktuatorpole stellen aus bandförmigen Blechen gewickelte, regelmäßige Sechsecke dar, deren gegenüberliegende Spitzen abgeschnitten sind, wodurch zwei Hälften entstehen, die getrennt mit Wicklungen versehen sind. Der magnetische Kreis ist dementsprechend senkrecht zur Bewegungsrichtung des Aktuators gerichtet und die Bleche von Stator- und Aktuatorpol verlaufen gekreuzt zueinander.

Die mit der Erfindung erzielten Vorteile bestehen im wesentlichen darin, daß der Reluktanzmotor eine sehr gleichmäßige Kraftwirkung und damit eine verbesserte Laufruhe aufweist, daß der Stator nicht wie bisher aus langen Blechen besteht, sondern aus kurzen Blechstücken und die Herstellung dadurch einfach und extrem billig ist, und daß der freie Zwischenraum zwischen den Statorpolen zu Kühlzwecken nutzbar ist.

Fig. 1

EP 0 619 640 A2

Die Erfindung betrifft einen Reluktanzmotor, bestehend aus einem stationären Element und einem zweiten, beweglichen Element, die beide eine Anzahl von Polen aufweisen, wobei die Pole eines Elementes durch Ein- und Ausschalten eines durch den Polen zugeordnete Erregerspulen fließenden elektrischen Stromes I in festgelegter Reihenfolge über zeitlich begrenzte Abschnitte magnetisierbar und dadurch zwischen benachbarten Polen des stationären Elementes und des beweglichen Elementes ein magnetischer Kreis erzeugt wird, der im Streben nach minimalem magnetischen Widerstand beziehungsweise nach maximaler Induktivität L benachbarte Pole der beiden Elemente zueinander auszurichten versucht und dabei zugeführte elektrische Energie in Bewegungsenergie umwandelt.

Der Reluktanzmotor einfachster Form besteht aus einem Elektromagneten und einem Eisenkern, die relativ zueinander beweglich sind. Fließt durch die Spule der Induktivität L des Elektromagneten ein elektrischer Strom I, dann bilden Elektromagnet und Eisenkern einen geschlossenen magnetischen Kreis und zwischen Elektromagnet und Eisenkern wirkt eine Kraft F, die eine Verrückung $d_s$ bewirkt und die mechanische Energie F • $d_s$ erzeugt. Durch die Relativbewegung ändert sich der magnetische Widerstand des magnetischen Kreises und damit die Induktivität L der Spule, die für den magnetischen Fluß zuständig ist. Die Kraft zwischen Elektromagnet und Eisenkern, die eine Ausrichtung beider Körper anstrebt, ist

$$F = c \cdot I^2 \cdot \frac{dL}{ds}$$

Bei konstantem Strom I ist die Kraft F dann konstant, wenn die Induktivität L mit dem zurückgelegten Weg ds linear zunimmt. Eine anziehende Kraft F existiert somit, wenn durch die Bewegung von Spule und Eisenkern die Induktivität L wachsen kann, d.h. wenn der bewegliche Pol sich mit dem stationären Pol ausrichtet. Die Induktivität L ist am größten, wenn beweglicher Pol und stationärer Pol so ausgerichtet sind, daß die Reluktanz ein Minimum hat.

Leistet der Reluktanzmotor mechanische Arbeit, so nimmt er elektrische Energie auf. Ist I konstant, so wird die aufgenommene elektrische Energie $I^2$ • ΔL jeweils zur Hälfte in mechanische (Nutz-)Energie und reversibel in im Magnetfeld gespeicherte Energie umgesetzt.

Mit einer einzelnen Induktivität, d.h. mit einem einphasigen Reluktanzmotor läßt sich keine kontinuierliche Bewegung erzielen; erst mit zwei Induktivitäten, die abwechselnd, d.h. in zwei Phasen, arbeiten, wird eine kontinuierliche Bewegung erreicht. Während die eine, mechanische Arbeit verrichtende Spule magnetische Energie speichert, wird der Erregerstrom I der zweiten Spule heruntergeführt und die reversibel gespeicherte magnetische Energie zurückgewonnen.

Ein kontinuierlich arbeitendes Antriebssystem muß also aus mindestens zwei periodisch aktivierbaren Teilsystemen (Phasen) bestehen, deren Perioden im wesentlichen zwei Abschnitte aufweisen. Während des ersten Abschnitts wird elektrische Energie zugeführt und in mechanische Energie (Bewegung) und magnetische Energie (reversibel im Magnetfeld gespeichert) umgewandelt, wobei zur Erzeugung einer konstanten Kraft die Induktivität L linear zunehmen muß: dL/ds > 0. Während des zweiten Abschnitts wird die mit dem Strom I gekoppelte magnetische Energie in elektrische Energie zurückgewandelt. Soll der Motor auch in Gegenrichtung laufen, so gilt aus Symmetriegründen, daß die Induktivität L mit Beginn des zweiten Abschnitts linear abnimmt. dL/ds < 0. Der Verlauf der Induktivität L folgt also einer Dreiecksfunktion; dieser Verlauf gilt für beide Teilsysteme, wobei die Periode des ersten Teilsystems um 1/2 Periode phasenverschoben ist.

Die Nachteile des Zwei-Phasensystems bestehen darin, daß keine gezielte Richtungssteuerung möglich ist, weil die Ableitung der Induktivitätsfunktion im Umkehrpunkt nicht stetig ist, und daß nach Überschreiten des Umkehrpunktes, in dem die Induktivität L maximal ist, der Strom nicht sprunghaft auf Null zurückführbar ist. Da die Steigung der Induktivitätsfunktion in diesem Abschnitt negativ ist (dL/ds < 0) ergibt sich eine bremsende Kraft und das System funktioniert als Generator, wobei ein Teil der erzeugten mechanischen Energie in elektrische Energie zurückverwandelt wird. Die Laufruhe des Motors leidet darunter.

Diese Nachteile lassen sich mit einer dritten Phase, die eine dritte Spule erregt, beseitigen. Die Perioden der drei Phasen haben gegeneinander eine zeitliche Verschiebung von 1/3 Periode, laufen parallel und führen im Idealfall zu einer homogenen Kraftwirkung.

In der PCT WO 90/00831 ist die Veränderung der Induktivität L einer Phase in Abhängigkeit vom Drehwinkel eines Rotationsmotors in idealisierter Form dargestellt. Die Induktivität L zeigt einen für eine kontinuierliche Bewegung sehr ungünstigen Verlauf. Aufgrund des dargestellten Induktivitätsverlaufes läßt es sich nicht vermeiden, daß nach Überschreiten des Umkehrpunktes während des Abfalls von $L_{max}$ auf $L_{min}$ ein Bremsdrehmoment auftritt, das die Laufruhe des Motors wesentlich beeinträchtigt.

Weiterhin ist in der PCT WO 90/11641 der Verlauf von Induktivität L und Strom I einer Phase eines Reluktanzmotors in Abhängigkeit von der Umdrehungszeit dargestellt. Daraus geht hervor, daß der elektrische Strom I seinen Sollwert bereits erreicht, wenn die Induktivität L noch konstant ist und ihren Minimalwert $L_{min}$ hat, so daß wegen dL/ds = 0 in diesem Abschnitt keine Kraft erzeugt wird. Darüber hinaus liegt der Umkehrpunkt $T_1$ des Stromes, in dem der Strom abgeschaltet wird, zeitlich noch im Bereich des Anstiegs der Induktivität L von $L_{min}$ auf $L_{max}$. Der Strom schaltet sich also bereits ab, bevor die Induktivität L ihren Höchstwert $L_{max}$ erreicht. Dies bedeutet, daß die erzeugte Kraft vorzeitig abfällt und der Motor dadurch eine rauhe Laufweise erfährt.

Der Erfindung liegt deshalb die Aufgabe zugrunde, den periodischen Verlauf von Erregerstrom I und Induktivität L zu optimieren und die geometrische Anordnung und Ausbildung der Pole des stationären Elementes und des beweglichen Elementes des Reluktanzmotors darauf abzustimmen und so auszuführen, daß eine hohe Laufruhe, d.h. eine konstante Kraftwirkung, erreicht wird und außerdem eine wirtschaftliche Herstellung derartiger Motoren gewährleistet ist.

Diese Aufgabe wird erfindungsgemäß dadurch gelöst, daß die geometrische Anordnung und Ausbildung der Pole des stationären Elementes und des beweglichen Elementes des Reluktanzmotors und der periodische Verlauf von Erregerstrom I und Induktivität L einer Phase während der Bewegung des Reluktanzmotors so aufeinander abstimmbar sind, daß im ersten Abschnitt der Periode die Induktivität L konstant und minimal $L_{min}$ ist und der Erregerstrom I von Null auf den Sollwert $I_{soll}$ ansteigt,daß im zweiten Abschnitt der Periode die Induktivität L von dem Minimalwert $L_{min}$ auf den Maximalwert $L_{max}$ linear zunimmt bei konstantem Erregerstrom $I_{soll}$, daß im dritten Abschnitt der Periode die Induktivität L den Maximalwert $L_{max}$ beibehält und der Erregerstrom I auf Null abfällt, und daß im vierten Abschnitt der Periode die Induktivität L von dem Maximalwert $L_{max}$ auf den Ausgangswert $L_{min}$ zurückgeht und der Erregerstrom I Null ist.

Nach der Erfindung ist vorgesehen, daß bei dem durch drei Phasen erregbaren Reluktanzmotor der erste Abschnitt zeitlich 1/12 der Periode, der zweite Abschnit 1/3 der Periode, der dritte Abschnitt 1/4 der Periode und der vierte Abschnitt 1/3 der Periode betragen.

Ein weiteres Merkmal der Erfindung besteht darin, daß jeder Pol des beweglichen Elementes mit Erregerspulen versehen ist, wobei der Pol die Form eines aus Blechen gewickelten Sechsecks aufweist, dessen gegenüberliegende Spitzen so abgeschnitten sind, daß zwei Hälften entstehen, die getrennt bewickelbar sind, und daß die von den Stirnseiten der Bleche gebildeten Seitenflächen der Pole von den Polflächen ausgehende und nach innen verlaufende trapezförmige Einschnitte aufweisen.

Als vorteilhaft erweist sich, daß der magnetische Kreis senkrecht zur Bewegungsrichtung des beweglichen Elementes orientiert ist.

Außerdem sieht die Erfindung vor, daß die Orientierung der lamellierten Bleche des stationären Elementes und des beweglichen Elementes gekreuzt ist.

Die mit der Erfindung erzielten Vorteile bestehen insbesondere darin, daß ein Reluktanzmotor entwickelt wurde, der eine kontinuierlich und konstant wirkende Kraft erzeugt und somit eine hohe Laufruhe aufweist, und der aufgrund der geometrischen Ausbildung der Pole und der Orientierung der magnetischen Feldlinien einfach aufgebaut und wirtschaftlich herstellbar ist. Außerdem lassen sich durch die erfindungsgemäße Ausbildung des Reluktanzmotors lang ausgedehnte Transportsysteme realisieren, und aufgrund der sehr großen Kraft bei kleinen Geschwindigkeiten findet der Motor vorteilhaft Anwendung als Generator für langsam laufende Antriebe (Windgenerator ohne Getriebe).

Die Erfindung wird anhand eines Ausführungsbeispiels, das in der Zeichnung dargestellt ist, nachfolgend näher beschrieben.

Es zeigt

| | |
|---|---|
| Fig. 1 | eine schematische Darstellung eines Dreiphasen-Linearreluktanzmotors in Seitenansicht, |
| Fig. 2 | den zeitlichen Verlauf von Induktivität L und Erregerstrom I einer Phase während einer Periode, |
| Fig. 3a bis 3d | den Bewegungsablauf eines Aktuatorpoles innerhalb des Stators und der zugehörige ortsabhängige Verlauf der Induktivität L, |
| Fig. 4 | die Vorderansicht eines erfindungsgemäßen Aktuatorpoles, |
| Fig. 5 | die Seitenansicht des Aktuatorpoles aus Fig. 4, |
| Fig. 6 | die Draufsicht von oben auf den Aktuatorpol aus Fig. 4, |
| Fig. 7 | den Schnitt A-A aus Fig. 5 und |
| Fig. 8 | den Verlauf der magnetischen Feldlinien bei ausgerichtetem Aktuator- und Statorpol. |

Der elektrische Reluktanzmotor ist sowohl als Rotationsals auch als Linearmotor bekannt und gleichermaßen im Einsatz. Beiden Motoren ist gemeinsam, daß sie aus einem stationären Element, nachfolgend als Stator bezeichnet, und aus einem beweglichen Element bestehen, die beide mit einer Reihe von Polen ausgestattet sind. Bei dem Rotationsmotor ist der Stator als Kreisring ausgebildet, in dessen Inneren das bewegliche Element Drehbewegungen ausführt und dementsprechend als Rotor bezeichnet wird. Bei dem Linearmotor ist der Stator gestreckt ausgebildet und das bewegliche Element, nachfolgend als Aktuator bezeichnet, führt innerhalb des Stators Linearbewegungen aus.

Die Erfindung wird nachfolgend anhand eines Linearmotors 1 beschrieben, wobei die erfindungsgemäßen Merkmale auch auf einen Rotationsmotor übertragbar sind.

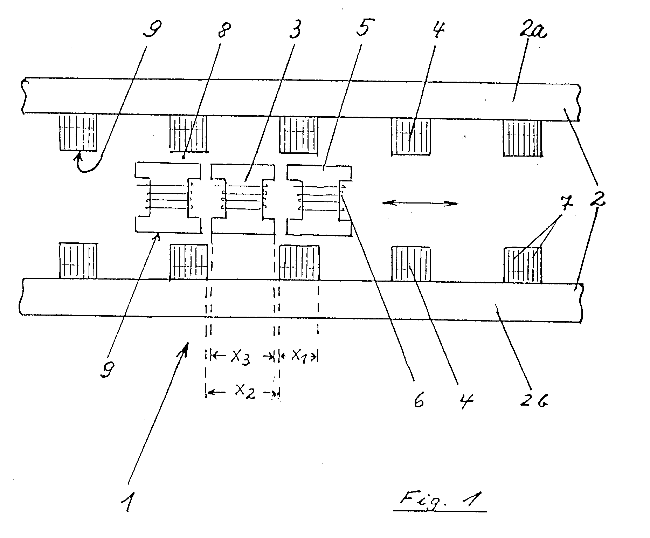

Fig. 1 zeigt in schematischer Darstellung eine Seitenansicht eines mit 1 bezeichneten Linear-Reluktanzmotors, dessen Stator 2 kammartig vorspringende Pole 4 aufweist, die auf entsprechenden Trägern 2a, 2b mit beliebigen magnetischen Eigenschaften, beispielsweise Beton, Kunststoff oder ähnlichen Materialien befestigt sind. Zwischen den Statorpolen 4 ist der in Pfeilrichtung bewegliche Aktuator 3 angeordnet, der in dem als Ausführungsbeispiel dargestellten Dreiphasen-Reluktanzmotor 1 aus drei miteinander verbundenen Aktuatorpolen 5 besteht. Bei diesem Ausführungsbeispiel sind die Aktuatorpole 5 mit Erregerspulen 6 versehen und nicht wie allgemein üblich die Statorpole 4. Diese Ausführung erweist sich bei langgestreckten Linearmotoren 1, d.h. bei Motoren mit großem Hub, als besonders vorteilhaft, da nicht die Vielzahl der Statorpole 4, sondern nur die drei Aktuatorpole 5 mit Kupferdraht bewickelt sind, was zu einer Ersparnis an Draht und Arbeitszeit führt. Allerdings wird bei dem dargestellten Ausführungsbeispiel die zugeführte elektrische Energie auf drei Aktuatorpole 5 konzentriert, was eine höhere Stromdichte zur Folge hat und zu einer unerwünschten Erwärmung führen kann; außerdem muß der Erregerstrom I über bekannte Anschlußelemente, die nicht in der Zeichnung dargestellt sind, den Erregerspulen 6 der beweglichen Aktuatorpole 5 zugeführt werden.

Bekanntlich besteht der magnetische Kreis des Reluktanzmotors 1 aus der Reihenschaltung eines niedrigen magnetischen Widerstandes mit konstantem Wert, der durch den Kern von Erregerspule 6 und Statorpol 4 erzeugt wird und eines hohen magnetischen Widerstandes mit periodisch veränderlichem Wert, der durch den Luftspalt 8 zwischen Statorpol 4 und bewegtem Aktuatorpol 5 erzeugt wird. Um eine größere Laufruhe des Reluktanzmotors 1 bzw. eine konstante Kraft und eine bessere Energieausnutzung zu erzielen, sieht die Erfindung vor, den magnetischen Kreis so auszuführen, daß der magnetische Widerstand und damit die zu ihm umgekehrt proportionale Induktivität L einer Phase periodisch so veränderbar ist, daß sie zu Beginn der Periode konstant und minimal $L_{min}$ ist, dann linear von dem Minimalwert $L_{min}$ auf den Maximalwert $L_{max}$ ansteigt, danach konstant bleibt und schließlich wieder auf den minimalen Ausgangswert $L_{min}$ abnimmt, wobei der zeitliche Verlauf des Erregerstromes I auf den Verlauf der Induktivität L abgestimmt ist.

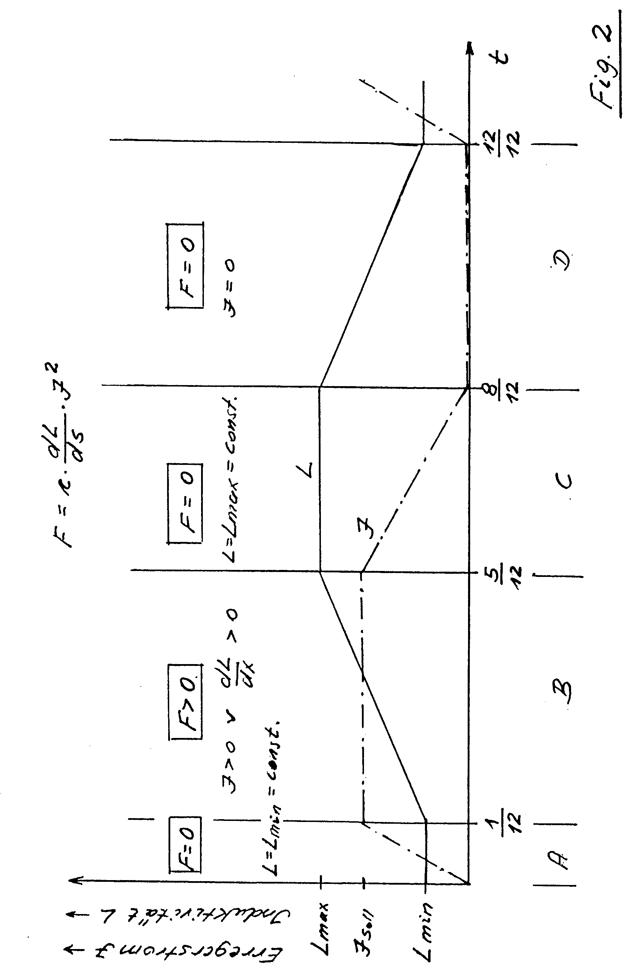

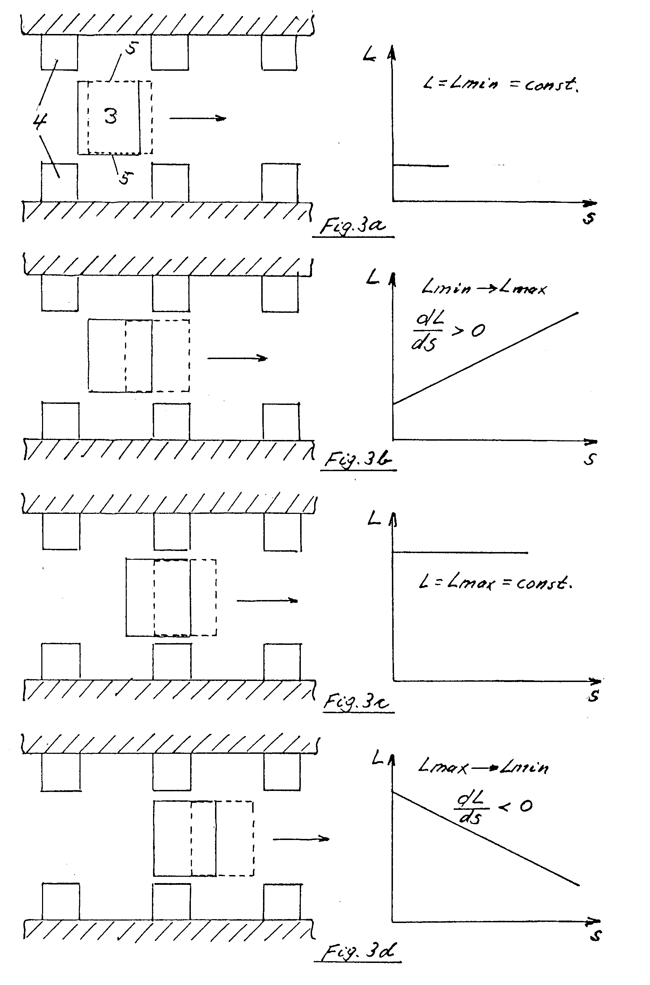

Fig. 2 zeigt in idealisierter Form den erfindungsgemäßen Verlauf von Induktivität L und Erregerstrom I einer Phase eines dreiphasigen Reluktanzmotors 1 während einer Periode. Zu diesem Diagramm ist anzumerken, daß der Verlauf des Stromes I zeitabhängig ist, während der Verlauf der Induktivität L ortsabhängig ist und das Diagramm den Stromverlauf bei maximaler, konstanter Geschwindigkeit zeigt. Auf den ortsabhängigen Verlauf der Induktivität L wird in den nachfolgenden Fig. 3a bis 3d noch eingegangen. Wie aus Fig. 2 hervorgeht, ist die Periode in vier zeitlich unterschiedlich große Abschnitte A, B, C, D unterteilt, in denen Induktivität L und Erregerstrom I vorgegebene charakteristische Werte annehmen:

Abschnitt A: Für 1/12 der Periode ist die Induktivität L konstant und minimal, während der Erregerstrom I von Null auf seinen Sollwert $I_{soll}$ ansteigt. Die dazu benötigte Zeit beträgt

$$t = \frac{I \cdot L_{min}}{U},$$

wobei U die an die Erregerspule 6 angelegte Erregerspannung bedeutet. Während dieser Zeit leistet die Phase des Motors 1, wie vorgesehen, keine Kraft, denn aus L = const folgt dL/ds = 0 und daraus folgt K = 0.

Abschnitt B: Die Induktivität L steigt während 1/3 der Periode linear von dem Minimalwert $L_{min}$ auf einen Maximalwert $L_{max}$ an, während der Erregerstrom I auf seinem Sollwert $I_{soll}$ konstant gehalten wird. Der Induktivitätsanstieg kommt durch die Bewegung des Aktuatorpoles 5 auf den Statorpol 4 hin zustande, was in den folgenden Fig. 3a bis 3d noch gezeigt wird. Während des Abschnitts B wird eine Kraft erzeugt, denn aus I > 0 und dL/ds > 0 folgt K > 0.

Abschnitt C: Die Induktivität L bleibt während 1/4 der Periode konstant bei $L_{max}$ und der Erregerstrom I wird auf Null herabgeführt. Die dazu benötigte Zeit

$$t = \frac{I \cdot L_{max}}{U}$$

ist länger als die Einschaltzeit. Eine Kraftwirkung entsteht nicht, denn aus L = const folgt K = 0.

Abschnitt D: Die Induktivität L nimmt während 1/3 der Periode linear auf den Ausgangswert $L_{min}$ ab und, der Erregerstrom I bleibt ausgeschaltet. Eine Kraftwirkung entsteht wie vorgesehen nicht, denn wenn kein Strom fließt, kann keine Kraft entstehen.

Wie aus dieser Darstellung hervorgeht, erzeugt eine Phase nur während 1/3 ihrer Periode eine Kraft. Im Zusammenwirken der drei Phasen des dreiphasigen Reluktanzmotors 1 wird eine kontinuierlich und konstant wirkende Kraft während der gesamten Periode erzeugt, ohne daß bremsende Effekte infolge nicht abgestimmter Induktivitäts- und Erregerstromverläufe die Laufruhe des Reluktanzmotors 1 beeinträchtigen.

In den Fig. 3a bis 3d ist schematisch der Ablauf der Bewegung eines Aktuatorpoles 5 innerhalb der Statorpole 4 während einer Periode sowie der entsprechende ortsabhängige Verlauf der Induktivität L dargestellt. Die Ausgangsstellung des Aktuatorpoles 5 ist jeweils durch das ausgezogene Rechteck, die Endstellung des Aktuatorpoles 5 durch das gestrichelte Rechteck und die Bewegungsrichtung durch den Pfeil gekennzeichnet.

Im Abschnitt A (Fig. 3a) bewegt sich der Aktuatorpol 5 gerade außerhalb zweier, nebeneinander angeordneter Statorpole 4; die Induktivität L bleibt während der Bewegung annähernd konstant und minimal: $L_{min}$.

Im Abschnitt B (Fig. 3b) bewegt sich der Aktuatorpol 5 beispielsweise mit seiner rechten Kante von links in den Bereich zweier gegenüberliegender Statorpole 4, bis die rechten Kanten von Aktuatorpol 5 und gegenüberliegenden Statorpolen 4 in einer Flucht liegen; die Induktivität L nimmt linear von $L_{min}$ auf $L_{max}$ zu.

Im Abschnitt C (Fig. 3c) bewegt sich der Aktuatorpol 5 innerhalb des Bereiches gegenüberliegender Statorpole 4 so weit nach rechts weiter, bis seine linke Kante mit den linken Kanten der Statorpole 4 fluchtet; die Induktivität bleibt konstant und ist maximal $L_{max}$.

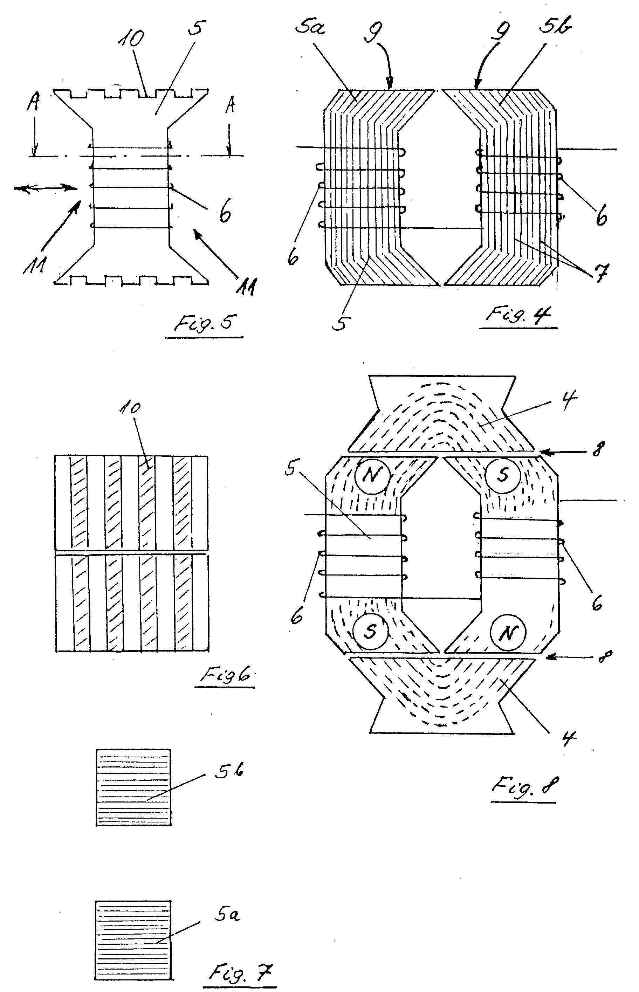

Im Abschnitt D (Fig. 4d) bewegt sich der Aktuatorpol 5 aus dem Bereich der gegenüberliegenden Statorpole 4 hinaus und kehrt in seine Ausgangsstellung gemäß Fig. 3a wieder zurück; die Induktivität L nimmt linear von $L_{max}$ auf $L_{min}$ ab.

Ein Reluktanzmotor, der dieses Verhalten zeigt, ist der in Fig. 1 dargestellte Linearmotor 1 mit den erfindungsgemäß ausgebildeten und angeordneten Stator- und Aktuatorpolen 4, 5. Erfindungsgemäß verhält sich die Breite $x_1$ der Polfläche 9 eines Statorpoles 4 zu dem Abstand $x_2$ zweier benachbarter Statorpole 4 wie 1:2. Die Breite $x_3$ der Polfläche 9 eines Aktuatorpoles 5 wird durch den Abstand $x_2$ zweier benachbarter Statorpole 4 bestimmt und ist um die in dem Abschnitt A von dem Aktuatorpol 5 zurückgelegte Weglänge kleiner als $x_2$, d.h. $x_3 = x_2 - \frac{1}{12} \cdot (x_1 + x_2)$ oder in konkreten Zahlen ergibt sich bei $x_1 = 1$ LE (LE = Längeneinheit) für $x_2 = 2$ LE und für $x_3 = 1,75$ LE.

Neben der geometrischen Anordnung der Pole 4, 5 von Stator 2 und Aktuator 3 zur Realisierung des erfindungsgemäßen Induktivitätsverlaufes ist auch die Ausbildung der Pole 4, 5 für die Güte des Reluktanzmotors 1 von entscheidender Bedeutung. Für die Herstellung der Pole 4, 5 werden magnetisch leitende Werkstoffe, beispielsweise Eisen, Ferrite oder amorphe Werkstoffe für den magnetischen und Kupfer für den elektrischen Kreis verwendet. Diese Werkstoffe sind nicht ideal. Kupfer hat einen ohmschen Widerstand und wandelt elektrische Energie in Wärme um. Die magnetisch leitenden Werkstoffe, ob hart oder weich, sind nicht beliebig stark magnetisierbar und erzeugen beim Ummagnetisieren ebenfalls Wärme.

Zur Minderung von Wirbelströmen können die Kerne der Stator- und Aktuatorpole 4, 5 aus gegeneinander isolierten, miteinander verklebten Blechen aus magnetisch leitenden Werkstoffen, in der Regel Eisen, zusammengesetzt sein. Der Aufbau eines solchen erfindungsgemäßen Aktuatorpoles 5 ist in den Fig. 4 bis 8 in verschiedenen Ansichten dargestellt. Zur Minimierung der ohmschen Verluste ist erfindungsgemäß vorgesehen, die Geometrie des Aktuatorpoles 5 der Kreisform anzunähern, wodurch gegenüber der üblichen rechteckigen Form eine kleinere Magnetfeldlänge erreichbar ist. Die Kreisform läßt sich mit guter Annäherung einstellen, wenn, wie aus der Vorderansicht eines Aktuatorpoles in Fig. 4 ersichtlich ist, der Kern des Aktuatorpoles 5 aus einem aus bandförmigem Blech gewickelten Sechseck hervorgeht, wobei die gegenüberliegenden Spitzen des Sechsecks abgeschnitten sind. Die beiden entstandenen Hälften 5a, 5b sind im Mittelteil getrennt bewickelt, so daß zwei Elektromagnete entstehen, deren nebeneinander liegende Pole jeweils ein Nord- und ein Südpol N, S sind (Fig. 8).

Wie aus der Seitenansicht des Aktuatorpoles 5 in Fig. 5 hervorgeht, weist der Kern des Poles 5 auf beiden von den Stirnseiten der Bleche 7 gebildeten Seiten einen trapezförmigen Einschnitt 11 auf. Dadurch entsteht einmal der benötigte Wickelraum für die Erregerspule 6 und zum anderen wird dadurch die Querschnittsfläche des Kerns im Bereich der umschließenden Wicklung quadratisch ausgebildet, wie die Schnittdarstellung in Fig. 7 zeigt. Die sich daraus ergebenden Vorteile bestehen darin, daß die Aktuatorpole 3 der drei Phasen sehr dicht nebeneinander montierbar sind, was zu einem kurzen Aufbau des gesamten Aktuators 3 und bei dem Linearmotor 1 zu einem größeren Hub führt und daß die Wicklungslänge aufgrund des quadratischen Querschnitts minimal wird.

Bei gegebener Polfläche bestimmt der L-Gradient $d_L/d_s$ die Kraft des Motors. Es ist Stand der Technik, durch die Ausbildung von Zähnen auf den Polen $d_L/d_s$ zu vervielfachen, wobei die erreichbare Geschwindigkeit absinkt, die Leistung jedoch konstant bleibt. Die Polflächen 9 werden gezahnt und die Bleche 7 der Statorpole 4 dünner ausgeführt.

Nach Fig. 5 und 6 erstreckt sich die Polzahnung 10 senkrecht zur Bewegungsrichtung des Aktuatorpols, die in Fig. 5 durch einen Pfeil angezeigt ist, von einem Ende des Poles 5 bis zum anderen Ende. Die Polzahnung ist so ausgebildet, daß die Breite der Polzähne sich zu der Breite der Zahnzwischenräume wie 7/12 : 5/12 verhält, was aus den Fig. 5 und 6 nicht eindeutig hervorgeht. Dadurch verringert sich die wirksame Polfläche 9; da jedoch die beim Abschneiden der Sechseckspitzen entstehenden Polflächen 9 des Aktuatorpoles 5 gegenüber dem auf quadratischen Querschnitt gefertigten Mittelbereich des Kernes aufgeweitet sind, wird erreicht, daß die aktive Querschnittsfläche im gesamten magnetischen Kreis annähernd konstant bleibt und keine partiellen Sättigungen auftreten können.

Der magnetische Kreis, der aus dem Verlauf der magnetischen Feldlinien bei ausgerichtetem Aktuator- und Statorpol 4, 5 in Fig. 8 erkennbar ist, ist nicht wie üblich in Bewegungsrichtung des Aktuators 3 orientiert, sondern senkrecht dazu. Dies hat zur Folge, daß der Stator 2 nicht mehr wie bisher aus langen gezahnten Blechen 7 besteht, sondern daß die Statorpole 4 aus einfachen Blechstücken zusammensetzbar sind. Die Herstellung wird dadurch sehr billig, es können sogar Abfallstücke verwendet werden, die bei der Produktion von Transformatorenkernen anfallen. Die erfindungsgemäße Ausbildung des Stators 2 und der Statorpole 4 erlaubt es, daß der Stator 2 in begrenztem Maß gebogen werden kann und Transportsysteme über größere Distanzen möglich sind. Außerdem ist der Raum zwischen den Statorpolen 4 frei und ergibt eine gute Möglichkeit der Kühlung.

Eine vorteilhafte Folgerung dieser Konstruktion ist dadurch gegeben, daß die Orientierung der am magnetischen Fluß beteiligten Stator- und Aktuatorbleche 7 gekreuzt ausgeführt werden kann. Dadurch wird es möglich, daß die geschlossenen magnetischen Feldlinien nicht von einem zu einem anderen durch die Isolierung getrennten Blech 7 wechseln müssen, wenn die parallelen Bleche 7 von Stator- und Aktuatorpol 4, 5 nicht richtig zueinander justiert sind. Bei der erfindungsgemäßen gekreuzten Ausführung der Stator- und Aktuatorbleche 7 finden die magnetischen Feldlinien immer das "richtige" Blech 7.

**Patentansprüche**

1. Reluktanzmotor, bestehend aus einem stationären Element und einem zweiten, beweglichen Element, die beide eine Anzahl von Polen aufweisen, wobei die Pole eines Elementes durch Ein- und Ausschalten eines durch den Polen zugeordnete Erregerspulen fließenden elektrischen Stromes I in festgelegter Reihenfolge über zeitlich begrenzte Abschnitte magnetisierbar sind und dadurch zwischen benachbarten Polen des stationären Elementes und des beweglichen Elementes ein magnetischer Kreis erzeugt wird, der im Streben nach minimalem magnetischen Widerstand bzw. nach maximaler Induktivität L benachbarte Pole der beiden Elemente zueinander auszurichten versucht und dabei zugeführte elektrische Energie in Bewegungsenergie umwandelt, **dadurch gekennzeichnet**, daß die geometrische Anordnung und Ausbildung der Pole (4,5) des stationären Elementes (2) und des beweglichen Elementes (3) des Reluktanzmotors (1) und der periodische Verlauf von Erregerstrom I und Induktivität L einer Phase während der Bewegung des Reluktanzmotors (1) so aufeinander abstimmbar sind, daß im ersten Abschnitt (A) der Periode die Induktivität L konstant und minimal $L_{min}$ ist und der Erregerstrom I von Null auf den Sollwert $I_{soll}$ ansteigt, daß im zweiten Abschnitt (B) der Periode die Induktivität L von dem Minimalwert $L_{min}$ auf den Maximalwert $L_{max}$ linear zunimmt bei konstantem Erregerstrom $I_{soll}$, daß im dritten Abschnitt (C) der Periode die Induktivität L den Maximalwert $L_{max}$ beibehält und der Erregerstrom I auf Null abfällt, und daß im vierten Abschnitt (D) der Periode die Induktivität L von dem Maximalwert $L_{max}$ auf den Ausgangswert $L_{min}$ zurückgeht und der Erregerstrom I Null ist.

2. Reluktanzmotor nach Anspruch 1, **dadurch gekennzeichnet**, daß bei dem durch drei Phasen erregbaren Reluktanzmotor (1) der erste Abschnitt (A) zeitlich 1/12 der Periode, der zweite Abschnitt (B) 1/3 der Periode, der dritte Abschnitt (C) 1/4 der Periode und der vierte Abschnitt (D) 1/3 der Periode betragen.

3. Reluktanzmotor nach Anspruch 1 und 2, **dadurch gekennzeichnet**, daß jeder Pol (5) des beweglichen Elementes (3) mit Erregerspulen (6) versehen ist, wobei der Pol (5) die Form eines aus Blechen (7) gewickelten Sechsecks aufweist, dessen gegenüberliegende Spitzen so abgeschnitten sind, daß zwei Hälften (5a, 5b) entstehen, die getrennt bewickelbar sind, und daß die von den Stirnseiten der Bleche (7) gebildeten Seitenflächen der Pole (5) von den Polflächen (9) ausgehende und nach innen verlaufende trapezförmige Einschnitte (11) aufweisen.

4. Reluktanzmotor nach Anspruch 1, 2 und 3, **dadurch gekennzeichnet**, daß der magnetische Kreis senkrecht zur Bewegungsrichtung des beweglichen Elementes (3) orientiert ist.

5.  Reluktanzmotor nach einem oder mehreren der vorgenannten Ansprüche, **dadurch gekennzeichnet**, daß die Orientierung der lamellierten Bleche (7) des stationären Elementes (2) und des beweglichen Elementes (3) gekreuzt ist.

Fig. 1

Fig. 2

$L = Lmin = const.$

Fig. 3a

$Lmin \rightarrow Lmax$

$$\frac{dL}{dS} > 0$$

Fig. 3b

$L = Lmax = const.$

Fig. 3c

$Lmax \rightarrow Lmin$

$$\frac{dL}{dS} < 0$$

Fig. 3d

Fig. 5

Fig. 4

Fig 6

Fig. 8

Fig. 7